# EUROPEAN PATENT SPECIFICATION

(11) **EP 1 261 264 B1**
(45) Date of publication and mention of the grant of the patent: **18.08.2004**
(21) Application number: 01906452.6
(22) Date of filing: 09.02.2001
(51) Int. Cl.: A47C 7/74

(54) **DEVICE FOR HEATING A COMPONENT IN A VEHICLE**
HEIZUNGSVORRICHTUNG FÜR EINE FAHRZEUGKOMPONENTE
DISPOSITIF PERMETTANT DE CHAUFFER UN COMPOSANT DANS UN VEHICULE

(30) Priority: 11.02.2000 SE 0000441
(43) Date of publication of application: 04.12.2002
(73) Proprietor: Kongsberg Automotive AB, 565 28 Mullsjö (SE)
(72) Inventor: HOLMBERG, Lennart, S-421 40 Falköping (SE); WESTH, Gustav, S-565 32 Mullsjö (SE)
(74) Representative: Andersson, Per Rune
(86) International application number: PCT/SE2001/000263
(87) International publication number: WO 2001/058315

(56) References cited:
- US-A- 3 715 458
- US-A- 4 233 492
- US-A- 4 352 976

## Description

### TECHNICAL FIELD

The present invention relates to a device for heating a component in a vehicle environment comprising a heating element and means for feeding current through the heating element. The invention is particularly intended to be applied in connection with heating of electrically heatable seats for occupants in a vehicle.

### PRIOR ART

By reasons of comfort and security, electrically heatable seats are used in the vehicles of today. The driver's seat as well as the other seats in the vehicle may thus be arranged to be heated by means of special heating elements in the form of one or more electrically conductive heating wires which are placed in the form of one or more loops in the respective seat. Such a heating wire is normally placed in the seat and the back in the respective seat when this is manufactured. The heating wire is further connected to a current feeding unit that delivers current. The heating wire may thus be warmed up to a suitable temperature.

There is a desire for the respective seat to have an accurately adapted temperature on its surface, i.e. on the surface that the occupants in the vehicle sense. For this purpose the temperature of the heating wire may be adjusted by means of a temperature sensor that is arranged in close vicinity of the heating element and that is connected to a central control unit. Using the temperature sensor and the control unit, the existing temperature may be detected. The control unit also comprises current feeding circuits, that for example may be based on transistor or relay technology, for feeding current to the heating wire. Thus the central control unit is arranged to feed a certain current to the heating wire until a certain desired value for the temperature is reached. The setting of this desired value may for example be made by means of fixed resistors or by means of an adjustable potentiometer that is adjusted by the occupant in the vehicle.

Using the regulation method described above, current is fed through the heating wire until the central control unit indicates that the desired value has been reached. Then the current feed is interrupted. This leads to that the heating wire gradually is cooled down. When the heating wire has been cooled down so much that its temperature once again falls below the desired value, the current feed to the heating wire will be resumed. Thus the temperature regulation continues as long as the system is turned on.

According to prior art the above-mentioned heating wire consist of a wire bundle with a relatively large number of wires (for example 15-150 pieces), so called strands. These strands consist of thin electrically conductive wires that are interlaced or made up into bundles in such a way that they together form the complete heating wire. Each one of the strands may have a diameter that is of a magnitude of about 0,05 mm. Respective end part of the heating wire - i.e. respective end part of each one of the strands - is then connected to the above-mentioned control unit, whereby current feeding though the heating wire is admitted.

Although this previously known heating wire normally admits a reliable heating and temperature regulation for by way of example a vehicle seat it is however connected with certain disadvantages. One such disadvantage relates to the fact that the different strands may be worn as time passes, even so much that one or more of the strands runs the risk of being torn apart, thus finally resulting in an interruption in the strand in question. If several strands are interrupted at essentially the same position along the heating wire this will result in that the total electrically conduction cross-section area of the heating wire will be reduced locally, which in turn brings about a local rise of the resistance in the heating wire at the position for the interruption. A rise of the resistance in turn leads to a raised voltage drop at the position for the interruption, since the current through the heating wire is kept constant.

The above-mentioned situation will thus lead to a raised temperature at the position for the interruption. If a large number of strands have been tom apart a sharply increased temperature will occur at the position for the interruption. This problem, the so called "hot-spot" problem, corresponds to a local increase of temperature in the seat, which in turn is experienced as uncomfortable for the person who sits in the current seat and which also may cause damage to the seat.

The problem could partially be solved by arranging a heating wire in the form of a number of parallel, separate parallel conductors extending across the current seat. The end parts of all those parallel conductors would then be connected with two transverse conductors which in turn are connected to the control unit. A disadvantage with this arrangement is the demand for a large number of contact points between the different conductors, which results in an expensive and complicated manufacturing process.

The patent document DE 1891074 teaches a heating wire which comprises a number of strands each of which is covered with an oxidized insulation layer.

### DISCLOSURE OF INVENTION

A main purpose with the present invention is to provide an improved device for heating of a vehicle seat, by means of which the risk of the above-mentioned "hot-spot" problem can be eliminated. This is obtained with a device, the characteristics of which are evident from the appended claim 1.

The invention constitutes a device for heating a component in a vehicle environment comprising a heating element and means for feeding current through the heating element, wherein the heating element is constructed in the form of a heating wire which in tum comprises a number of strands arranged together, of which a predetermined number of strands comprises an individual electrical insulation. Furthermore, the insulated strands are electrically parallel connected and connected in their respective end parts to said means for feeding current. Also, said electrical insulation consists of an electrically insulating lacquer layer.

By the invention an essential advantage is obtained as the risk of the above-mentioned "hot-spot" problem can be eliminated, since all insulated strands are electrically parallel connected.

According to a preferred embodiment of the invention, the heating element consists of a heating wire which in turn consists of a relatively large number of strands, for example of the magnitude 15-150 strands. An advantage of this is that it creates the necessary conditions for a long length of life of the complete heating element.

Advantageous embodiments are evident from the appended dependent claims.

### BRIEF DESCRIPTION OF DRAWINGS

The invention will in the following be described in connection with a preferred example of embodiment and the enclosed drawings, where
- Fig. 1: is a principle circuit diagram which shows a device according to the present invention,
- Fig. 2: shows the principle construction of a heating wire according to the invention, and
- Fig. 3: shows principally how a heating wire according to the invention is connected electrically.

### MODE FOR CARRYING OUT THE INVENTION

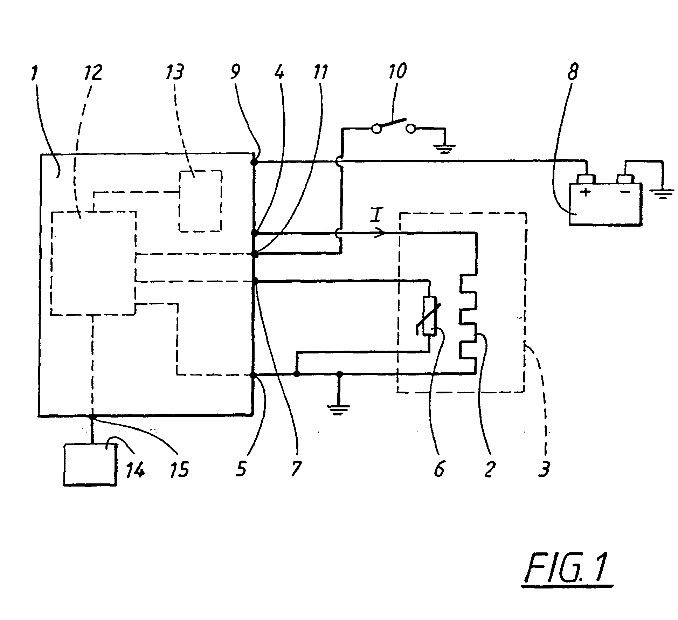

Figure 1 shows a principle circuit diagram of a device according to the present invention. According to the preferred embodiment the invention is intended to be used in connection with electrically heatable seats in vehicles. However, the invention is not limited for use in connection with vehicles. The figure shows the principle of a control unit 1, the internal components and connections of which are shown with dashed lines. The figure does not show all the components that are included in the control unit 1, but only the parts which are necessary for the understanding of the invention.

The control unit 1 is arranged for feeding a certain current I through an heating element 2. This heating element 2 is according to what will be described in detail below, constructed in the form of a number of electrical conductors which together with their electrical resistance forms a heating wire that is placed in the form of a loop. According to the embodiment the heating wire 2 is arranged inside a vehicle seat, preferably in its seat 3 (which is indicated with dashed lines in figure 1) and is preferably placed in a mainly zigzag-formed loop, alternatively in an S-formed pattern or some other kind of pattern extending over a larger part of the seat 3. The heating wire 2 may further also be mounted in the back rest of the vehicle seat (not shown in figure 1).

Although figure 1 shows one single heating wire 2 it is possible to connect several such wires to the control unit 1, for example in the form of separate heating wires for the seat portion of the seat 3 and for the back rest of the seat. When more than one heating wire is used, these may be connected to the control unit in parallel or alternatively in series.

According to what is shown in figure 1 the heating wire 2 is connected to the control unit 1 via two connections 4 and 5 respectively, of which the last-mentioned connection 5 also is connected to ground via a connection to the chassis of the vehicle. In connection with the heating wire 2 a detector is arranged in the form of a temperature sensor 6 that is electrically connected to the control unit 1 via the above-mentioned grounded connection 5 and a further connection 7. The temperature sensor 6 preferably consists of a termistor of the type NTC ("Negative Temperature Coefficient"), having a temperature dependent resistance corresponding to the temperature T that is present in connection with the heating wire 2. The temperature sensor 6 may be placed directly on the heating wire 2 or in the vicinity of the heating wire 2, for example between two of the lines defining the loop in which the heating wire 2 is placed. The specific placement of the temperature sensor 6 may thus vary within the scope of the invention.

Further, a current source 8 is connected to the control unit 1, via one further connection 9. The current source 8 preferably consists of the start battery of the vehicle.

The system also comprises an on/off-switch 10 that preferably is integrated into the ignition lock of the vehicle (not shown). The switch 10 is connected to a further connection 11 of the control unit 1. The control unit 1 is in a previously known manner arranged to be activated when the switch 11 is closed and thus admits heating of the heating element 2.

The control unit 1 comprises a logic part 12, that preferably is computer based but also may be constructed of known electronic circuits. The logic part 12 is connected to the heating wire 2, the temperature sensor 6 and the switch 10, via connections 5, 7 and 11 respectively. The logic part 12 is arranged for detection of a temperature value T corresponding to the signal which is delivered from the temperature sensor 6.

The control unit 1 further comprises a switch unit 13 that is connected with the logic part 12 that feed the current I to the heating wire 2 depending on signals from the logic part 12. The logic part 12 is further connected to a manoeuvring unit 14, via one further connection 15. By means of the manoeuvring unit 14, the person sitting in the seat 3 may for example adjust the desired temperature for the seat, which then corresponds to a calculated value of a desired set temperature T_{B} in the logic part 12 against which the heating wire 2 shall be regulated.

The logic part 12 is thus arranged to determine values of the local temperature T of the temperature sensor 6, which corresponds to a resistance value of the temperature sensor 6 which in turn corresponds to the current temperature T. If the current temperature T falls below the desired set value T_{B}, which corresponds to the desired temperature on the surface of the seat 3, the logic part 12 will control the switch unit 13 to deliver the current through the heating wire 2. When the desired value T_{B} is reached, the logic part 12 interrupts the current feed to the heating element 2 via the switch unit 13.

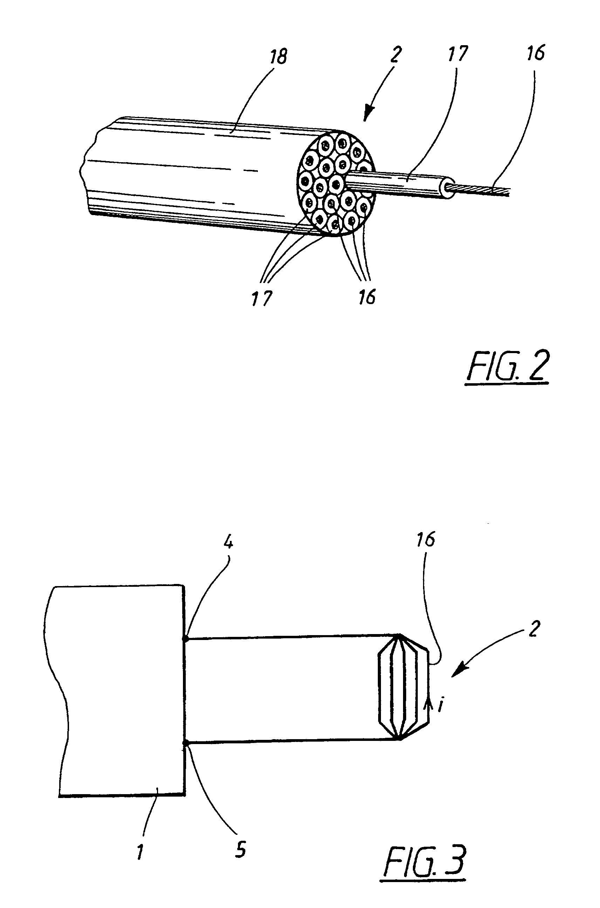

The main function of the invention will now be described mainly with reference to figure 2, which in principle form shows the construction of a heating wire 2 according to the invention. For instance, due to the above-mentioned "hot-spot" problem in connection with heating wires of a previously known kind it is a basic principle for the present invention that the heating wire 2 is designed with a certain number, for example 15-150, relatively thin wires, so called strands 16, of which an essential number are individually electrically insulated by means of a thin insulating layer 17. However, the invention is not limited to the above-mentioned number, but variation but both upwards and downwards may occur depending on the current application and depending on the demands concerning length of life, performance and function. During dimensioning of an heating element and choosing the components that are included in the system, among other things the determined power which is intended to be emitted of the heating element is considered. A specific choice of power in turn delivers a measure of a corresponding total cross-sectional area of the heating wire 2 (where a certain resistivity of the heating wire is assumed). The invention is then based on the principle that a relatively large number of thin strands together forms the heating wire 2, rather than a relatively small number of thick strands. This in turn renders advantages in the form of a long length of life of the heating wire 2. A relatively large number of thin strands 16 also creates the necessary conditions for being sewed into a seat without occurrence of any errors, for example that needles may hit and damage the strands during a sewing process. It may thus be established that the specific number of strands 16 in the respective application is chosen in accordance with stipulated demands concerning for example the length of life of the heating element.

The strands 16 are in a previously known way electrically conductive and are for this purpose made of an electrically conductive material such as copper, stainless steel or some other suitable metal or metal alloy with good conductive characteristics. The insulation layers are preferably made of a covering enamel layer or another electrically insulating material.

According to what is evident from figure 2 the strands 16 with their insulating layers 17 are bundled together or interlaced, thus forming the complete heating wire 2. In the figure the heating wire 2 is shown as being cut off but with a strand 16 which protrudes with its insulating layer 17 from the otherwise cut off part of the heating wire 2. The strands 16 that are bundled together are suitably surrounded with an enclosing protective casing 18, but this is principally not necessary.

The above-mentioned "hot-spot" problem can be eliminated as respective strand 16 is provided with the electrically insulating layer 17. Since the individual strands 16 are not in electrical contact with each other then, an essentially equal current will flow through each respective strand 16 during current feeding of the heating wire 2. If an interruption should occur on for example some individual strand this would not imply that the resistance of the heating wire 2 should arise locally, since the strands which are interrupted are not in contact with the strands through which current is fed. By this reason no temperature rise should occur locally along the heating wire 2.

The function of the invention is also evident from figure 3, which schematically shows a possible example with five insulated strands 16 which electrically can be considered as parallel connected in relation to each other. The terminal points of all the strands 16 are then connected to the control unit 1 via the connections 4 and 5 respectively (see figure 1), when the control unit 1 is arranged for feeding current through these strands 16. When this parallel connection is used, a certain current will flow through respective strand 16 during the current feed. If an interruption should occur on for example a strand, an equally great current will still flow through the four strands which still are intact. Thus no locally raised resistance will occur in the heating wire 2 at the position for the interruption, which in turn eliminates the risk of the "hot-spot" problem.

With reference to figure 2 once again, it is evident that all of the strands 16 in the heating wire 2 are equipped with an insulating layer 17. However, the invention is not limited to this embodiment, but the invention may also be realised in such a way that at least a certain minimum number of strands are made insulated. This minimum number is suitably chosen in relation to how many uninsulated that would be able to lead to the "hot-spot" problem (i.e. at interruption of one or more of the uninsulated strands).

According to the invention, the positions for the strands that then should be uninsulated inside the heating wire 2 may also be chosen in the light of the risk of the "hot-spot" problem. If, for example, some strands are known by experience to run a larger risk of being interrupted than others it is seen to that at least those strands which are estimated to run the least risk of interruption are equipped with insulation. If then, for example, five out of twenty strands should be tom off - and if the heating wire 2 is arranged so that the tom off strands are uninsulated and the remaining fifteen strands are insulated - it may be seen to that the "hot-spot" problem does not occur since further strands that possibly will be tom apart are insulated.

The invention may alternatively be realised in such a way that the heating of the heating element is thermostat-controlled. Then the above-mentioned control unit, temperature sensor etc. are consequently not needed.

## Claims

1. Device for heating a component (3) in a vehicle environment comprising a heating element (2) and means for feeding current (I) through the heating element (2), wherein the heating element (2) is constructed in the form of a heating wire which in turn comprises a number of strands (16) arranged together, of which a predetermined number of strands (16) comprises an individual electrical insulation (17), and that the insulated strands (16) are electrically parallel connected and connected in their respective end parts to said means for feeding current (I), wherein said electrical insulation (17) consists of an electrically insulating lacquer layer.

2. Device according to claim 1, **characterized in that** the number of strands (16) in the heating wire (2) comprising an individual insulation (17) is chosen depending on demands concerning the maximum allowed temperature increase of said seat (3) in consequence of a possible interruption of one of more strands (16).

3. Device according to any of the preceding claims, **characterized in that** the number of strands (16) is essentially of the magnitude 15-150.

4. Heating element (2) for heating of a seat (3) by feeding current (I) through the heating element (2) depending on a predetermined desired value (T_{b}), wherein the heating element (2) is constructed in the form of a heating wire which in turn comprises a number of strands (16) arranged together, of which a predetermined number comprises an individual electrical insulation (17), and that the insulated strands (16) are electrically parallel connected and arranged to be connected in their respective end parts to means for feeding current (I), wherein said electrical insulation (17) consists of an electrically insulating lacquer layer

5. Heating element according to claim 4, **characterized in that** the number of strands (16) is essentially of the magnitude 15-150.

## Patentansprüche

1. Vorrichtung zum Heizen einer Komponente (3) eines Fahrzeuginnenraumklimas, zu der ein Heizelement (2) und eine Einrichtung zur Einspeisung des Stroms (I) in das Heizelement gehören, wobei das Heizelement (2) als Heizdraht ausgeführt ist, der seinerseits aus einer Anzahl zusammengehaltener Adern (16) besteht, von denen eine bestimmte Anzahl mit einer gesonderten elektrischen Isolierung (17) versehen ist, und wobei die isolierten Adern (16) elektrisch parallel miteinander verbunden und mit ihren entsprechenden Enden an die Einrichtung zur Einspeisung des Stroms (I) angeschlossen sind, bei dem die elektrische Isolierung (17) aus einer elektrisch isolierenden Lackschicht besteht.

2. Vorrichtung nach Anspruch 1, **dadurch gekennzeichnet, dass** die Anzahl der Adern (16) im Heizdraht (2) mit gesonderter Isolierung (17) entsprechend den Anforderungen hinsichtlich des maximal zulässigen Temperaturanstieg des Sitzes (3) als Folge einer möglichen Unterbrechung einer oder mehrerer Adern (16) gewählt wird.

3. Vorrichtung nach einem der vorstehenden Ansprüche, **dadurch gekennzeichnet, dass** die Anzahl der Adern (16) im Allgemeinen 15 bis 150 beträgt.

4. Heizelement (2) zum Heizen eines Sitzes (3) durch Einspeisen des Stroms (I) in das Heizelement in Abhängigkeit von einem festgelegten Sollwert T_{b}, wobei das Heizelement (2) als Heizdraht ausgeführt ist, der seinerseits aus einer Anzahl zusammengehaltener Adern (16) besteht, von denen eine bestimmte Anzahl eine gesonderte elektrischen Isolierung (17) aufweist, und bei dem die isolierten Adern (16) elektrisch parallel miteinander verbunden sind und so angeordneten sind, dess sie mit ihren jeweiligen Enden an die Einrichtung zur Einspeisung des Stroms (I) angeschlossen sind, bei dem die elektrische Isolierung (17) aus einer elektrisch isolierenden Lackschicht besteht.

5. Heizelement nach Anspruch 4, **dadurch gekennzeichnet, dass** die Anzahl der Adern (16) im Allgemeinen 15 bis 150 beträgt.

## Revendications

1. Dispositif de chauffage d'un élément (3) dans un véhicule comportant un élément chauffant (2) et des moyens d'alimentation en courant (I) à travers l'élément chauffant (2), dans lequel l'élément chauffant (2) est agencé sous la forme d'un câble chauffant qui à son tour comprend un nombre de fils (16) disposés ensemble, dont un nombre prédéterminé de fils (16) comporte une isolation électrique individuelle (17), et que les fils isolés (16) sont connectés électriquement en parallèle et connectés à leurs parties terminales respectives auxdits moyens d'alimentation en courant (I), dans lequel ladite isolation électrique (17) consiste en une couche vernie électriquement isolante.

2. Dispositif selon la revendication 1, **caractérisé en ce que** le nombre de fils (16) dans le câble chauffant (2) comportant une isolation individuelle (17) est choisi en fonction des demandes concernant l'augmentation de température permise maximum dudit siège (3) en conséquence d'une interruption possible d'un fil ou plus (16).

3. Dispositif selon l'une quelconque des revendications précédentes, **caractérisé en ce que** le nombre de fils (16) est essentiellement d'amplitude 15-150.

4. Elément chauffant (2) pour chauffer un siège (3) par alimentation en courant (I) à travers l'élément chauffant (2) en fonction d'une valeur désirée prédéterminée (T_{b}), dans lequel l'élément chauffant (2) est agencé sous la forme d'un câble chauffant qui à son tour comprend un nombre de fils (16) disposés ensemble, dont un nombre prédéterminé comprend une isolation électrique individuelle (17), et que les fils isolés (16) sont connectés électriquement en parallèle et disposés pour être connectés à leurs parties terminales respectives aux moyens d'alimentation en courant (I), dans lequel ladite isolation électrique (17) consiste en une couche vernie électriquement isolante.

5. Elément chauffant selon la revendication 4, **caractérisé en ce que** le nombre de fils (16) est essentiellement d'amplitude 15-150.
